Europäisches Patentamt

European Patent Office

Office européen des brevets

(19)

(11) Publication number: **0 042 668**
B1

(12)

# EUROPEAN PATENT SPECIFICATION

(45) Date of publication of patent specification: **01.02.84**

(21) Application number: **81302303.3**

(22) Date of filing: **26.05.81**

(51) Int. Cl.³: **B 62 D 11/08,**
**B 60 T 13/16, B 60 T 11/10**

(54) Improvements in control valve assemblies for hydraulic braking and steering systems.

(30) Priority: **17.06.80 GB 8019804**

(43) Date of publication of application:
**30.12.81 Bulletin 81/52**

(45) Publication of the grant of the patent:
**01.02.84 Bulletin 84/5**

(84) Designated Contracting States:
**DE FR GB**

(56) References cited:
**DE - A - 2 630 517**
**GB - A - 1 472 136**
**US - A - 4 178 757**

(73) Proprietor: **LUCAS INDUSTRIES public limited**
**company**
**Great King Street**
**Birmingham, B19 2XF (GB)**

(72) Inventor: **Price, Anthony George**
**478 Gospel Lane**
**Acocks Green Birmingham B27 7AP (GB)**
Inventor: **Anderson, Robert Alan**
**38 Langcomb Road Shirley**
**Solihull West Midlands (GB)**

(74) Representative: **Spall, Christopher John et al,**
**BARKER, BRETTELL & DUNCAN 138 Hagley Road**
**Edgbaston Birmingham B16 9PW (GB)**

Courier Press, Leamington Spa, England.

## Improvements in control valve assemblies for hydraulic braking and steering systems

This invention relates to improvements in control valve assemblies for vehicle hydraulic braking and steering systems of the kind commonly on agricultural tractors and like vehicles in which separate first and second brake-applying valves are operable independently or simultaneously by independently operable pedals to cause hydraulic fluid under pressure to be supplied to one or both of a pair of outlets for connection to brakes on wheels on opposite sides of a vehicle.

The brake-applying valves may be housed in a common housing and can be operated simultaneously for retarding the vehicle or separately for steering.

Known control valve assemblies of the kind set forth, for example as disclosed in US—A—3 827 765, are usually operated by a yoke comprising a one-piece member which is pivotally connected at substantially the midpoint in its length to a valve-operating mechanism for controlling the hydraulic fluid under pressure and, at opposite ends, is coupled to different pedals, the yoke also being provided with spaced abutments for operating the brake-applying valves. When both pedals are operated simultaneously the yoke is moved bodily away from the housing to withdraw and operate the valve-operating mechanism and allow both brake-applying valves to open or remain open so that the hydraulic fluid under pressure is supplied to both outlets. When one pedal is operated on its own, initially the yoke pivots about the pivotal connection with the valve-operating mechanism with the abutment for the brake-applying valve corresponding to that pedal moving away from the said brake-applying valve which can open or remain open and the other abutment closing the other brake-applying valve. Further movement of that pedal in the same direction acts through the yoke to close or increase a closing force applied to the said other brake-applying valve, and withdraws the valve-operating mechanism from the housing so that pressurised fluid is supplied through the open brake-applying valve to the brakes on that side of the vehicle.

Another known control valve assembly of the kind set forth in the first part of claim 1 is disclosed in US—A—3 166 890 in which the brake-applying valves are housed in a common housing. Each brake-applying valve comprises a pedal-operated main piston, a floating secondary piston, a throttle means between the pistons, a brake-applying chamber for connection to a wheel brake on one side of the vehicle, a normally closed inlet valve for controlling communication between the brake-applying chamber and a common pressure space in the housing, a normally open exhaust valve for controlling communication between the pressure space and a fluid return passage which communicates via a return port with a reservoir for hydraulic fluid, and a spring for urging the inlet valve towards a closed position and for urging the exhaust valve towards an open position. The pressure space has a single inlet port which is connected to a source of circulating fluid, the exhaust valve of the first brake-applying valve comprises a spool valve between the pressure space and a cross passage in the housing and the exhaust valve of the second brake applying valve comprises a spool valve between the cross passage and the fluid return passage. This control valve assembly is of a relatively complicated construction and differs from assemblies in which each brake-applying valve is housed in a separate housing.

GB—A—1 472 136 discloses a master cylinder assembly in which the pressure spaces of separate master cylinders are connected by a transfer passage which contains an unsprung valve member. When one master cylinder is operated on its own the valve member is urged into engagement with one of a pair of valve seatings to cut-off communication between the pressure spaces, and when the master cylinders are operated simultaneously the valve member is held in a neutral position spaced from both seatings. In the system of GB—A—1 472 136 there is no source of circulating hydraulic fluid which is throttled to generate a brake-applying pressure.

According to our invention in a control valve assembly of the kind set forth in page 1, paragraph 1 each brake-applying valve comprises a pedal-operated main piston working in a bore in the valve housing, a floating secondary piston working in a portion of the bore in advance of the main piston, a throttle means provided between adjacent ends of the pistons, a brake-applying chamber defined by the bore and a reduced diameter portion of the secondary piston for connection to a wheel brake on one side of the vehicle, a pressure space in the bore in advance of the secondary piston, a normally closed inlet valve for controlling communication between the brake-applying chamber and the pressure space, a normally open exhaust valve for controlling communication between the pressure space and a return line to a reservoir for hydraulic fluid, and spring means for urging the inlet valve towards a closed position and for urging the exhaust valve towards an open position, the exhaust valve of the first brake-applying valve comprising a valve member which is normally spaced from a seating surrounding a port connected to the return line to the reservoir to permit communication between the exhaust port and an inlet port of the first brake-applying valve connected to a source of circulating fluid and the pressure space of that brake-applying valve with which the inlet port is in open communication at all times, and the exhaust valve of the second brake-applying valve comprising a valve member which is normally spaced from a seating surrounding a port connected to the reservoir to permit communication between that port and an inlet port of the second brake applying valve which is connected to the exhaust port of the first brake-applying valve, that valve member being sealingly guided through a wall which seals the pressure space from the inlet port of the second brake-applying valve, and a transfer connection being provided between the two pressure spaces.

When a brake-applying valve is operated the inlet valve opens before the exhaust valve closes and, after closure of the exhaust valve, the throttle means is operative to throttle the circulating fluid and generate a brake-applying pressure in the brake-applying chamber to apply the brake, the transfer connection serving to equalise the brake-applying pressures when both pedals are operated simultaneously, and to transfer circulating fluid from the pressure space of the first brake-applying valve to the pressure space of the second brake-applying valve when the second brake-applying valve is operated on its own.

Our invention provides an 'open-centre' system in which a return connection to the reservoir is throttled to generate pressure in fluid which is otherwise normally circulated by a pump at low pressure from a reservoir from whence it is returned.

Providing exhaust valves of different construction simplifies the valve assembly since only one inlet connection from the pump has to be provided and the transfer connection serves the dual function of equalising the brake-applying pressures when both brake-applying valves are operated simultaneously and enabling the second brake-applying valve to be operated on its own.

The invention will now be described with reference to the accompanying drawings in which:—

Figure 1 is a layout of a dual hydraulic braking system; and

Figure 2 is a view similar to Figure 1 but showing a modification of the brake-applying valve.

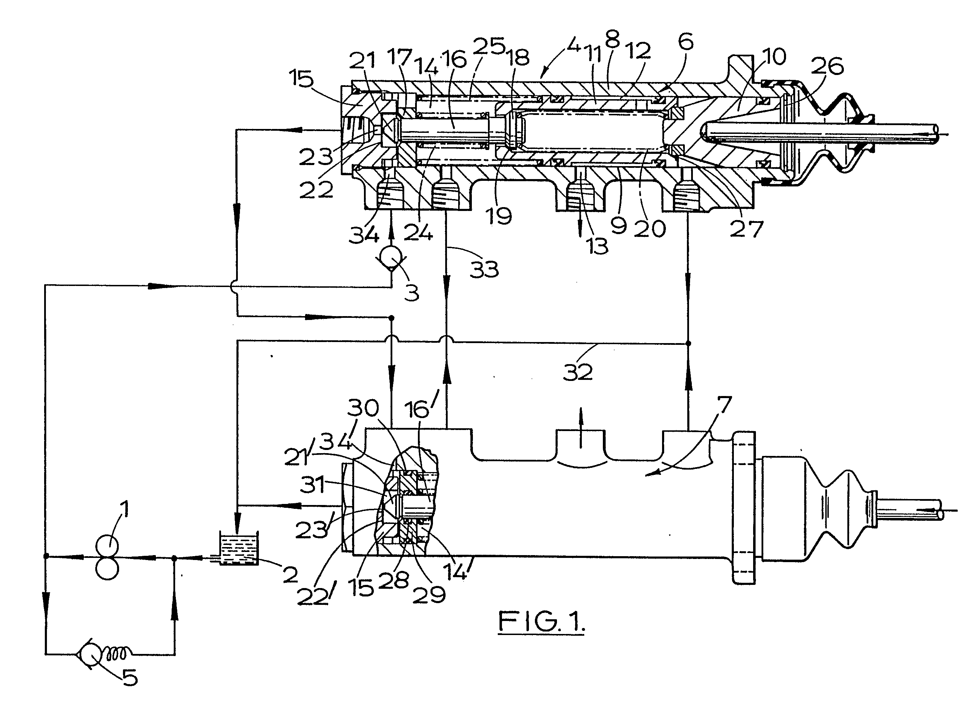

The dual hydraulic braking system illustrated in Figure 1 of the drawings is of the 'open-centre' type and comprises a pump 1 which is operating continuously to draw fluid from a reservoir 2 and pump it through a one-way valve 3 to a dual control valve assembly 4 from which it is returned to the reservoir 2. A pressure relief valve 5 is connected in parallel with the pump 1.

The dual control valve assembly comprises two separate pedal-operated brake-applying valves 6 and 7. The two valves 6 and 7 are similar in construction so that only the valve 6 will be described in detail with a description of the differences of the valve 7.

The valve 6 comprises a housing 8 having a longitudinal bore 9 in which works a pedal-operated main piston 10, and a floating hollow secondary piston 11 in advance of the piston 10. A brake-applying chamber 12 defined by the bore 9 and a portion of the secondary piston of reduced diameter is connected to a brake on one side of the vehicle through an outlet port 13. A pressure space 14 is defined in the bore between the piston 11 and a union 15 at the adjacent end of the bore 9.

A valve stem 16 guided through an apertured guide member 17 extends into the secondary piston 11 and carries an inlet valve head 18 for engagement with a seating 19 comprising a radial shoulder which surrounds that end of the piston bore. Normally the inlet valve head 18 is urged into engagement with the seating 19 to isolate the brake-applying chamber 12 from the pressure space 14 by a spring 20 which acts between the head 18 and the piston 10, and an exhaust valve head 21 at the opposite end of the stem 16 is normally held spaced from a seating 22 surrounding an exhaust port 23 by means of a spring 24 which is stronger than the spring 20.

A return spring 25 acts on the secondary piston 11 to hold both pistons in a retracted position defined by the engagement of the piston 10 with stop 26 in the housing 8, and the engagement between adjacent ends of the pistons 10, 11 defines a throttle 27 for throttling fluid circulated by the pump, in a manner to be described.

The brake-applying valve 7 is identical in construction to that of the valve 6 except that in the valve 7 the stem 16' is guided through a seal 28 in a guide member 29 which is itself sealed in the bore 9 by means of a seal 30. In this construction therefore the guide member 29 provides a sealed wall between the pressure space 14' and a chamber 31 which is disposed between the guide member and the union 15.

The two brake-applying chambers 12 are normally connected to the reservoir through a return line 32, the two pressure spaces are interconnected through a transfer line 33, the delivery side of the pump 1 on the down stream side of the one-way valve 3 is connected to an inlet port 34 in the brake-applying valve 6, the exhaust port 23 of the valve 6 is connected to the inlet port 34' of the valve 7, and the exhaust port 23' of the valve 7 is connected to the reservoir 2.

In the normal 'brake-off' inoperative position illustrated in the drawing fluid from the pump at low pressure is circulated in a closed circuit through the inlet port 34 of the valve 6 and the pressure space 14, out through the exhaust port 23, and is returned to the reservoir 2 through the inlet port 34' and the exhaust port 23' of the valve 7. The fluid also enters the pressure space 14' of the valve 7 through the transfer line 33.

When the brake-applying valve 6 is operated on its own the secondary piston 11 is advanced in the bore 9 in response to movement of the piston 10. Since the spring 24 is stronger than the spring 20, the seating 19 moves away from the head 18 so that fluid from the pump enters the brake-applying chamber 12. Subsequently the head 21 engages with the seating 22 to close the exhaust port 23 and the return to the reservoir 2, and the throttle 27 throttles the return to the reservoir 2 through the return line 32 to increase the pressure in the chamber 12 which is supplied to the brake on that side of the vehicle. This pressure is also supplied to the equivalent pressure space 14′ of the valve 7 but cannot be supplied to the brake which that valve 7 controls or returned to reservoir due to the engagement of the inlet valve heads of the second brake-applying valve with its seating, and the presence of the sealed guide member 29.

When the valve 7 is operated on its own the operation is similar to that of the valve 6 with the inlet valve head being separated from its seating so that pump fluid from the transfer line 33 can enter the brake-applying chamber of the valve 7 through the pressure space 14′ of that valve. Thereafter the head 21′ engages with the seating 22′ to close the exhaust port 23′ and the throttle throttles the return to the reservoir through the line 32 to increase the pressure which is supplied to the brake on that side of the vehicle.

Upon simultaneous operation of both valves 6 and 7, both inlet valve heads 18 separate from their seatings 19 to permit pump fluid to enter both brake-applying chambers 12. Thereafter the exhaust ports 23, 23′ are closed by the heads 21, 21′ and, due to the presence of the transfer connection 33, equal pressures are applied to the brake on both sides of the vehicle.

In the event of failure of the pump, the brakes can be applied hydrostatically by pressurisation by the main pistons 10 of volumes of fluid trapped in the pressure spaces 14, 14′ and the chambers 12 following closure of each or one exhaust port 23, 23′. The one-way valve 3 prevents fluid being returned to the pump, when the valves 6 and 7 are operated independently or simultaneously.

The pedal-operated piston 10 may be of greater diameter than the secondary piston 11, and work in a portion of the bore 9 which is of greater diameter. This provides each valve 6 and 7 with a boost ratio in the failed pump case since the increased area of the piston 10 acts to pressurise the fluid.

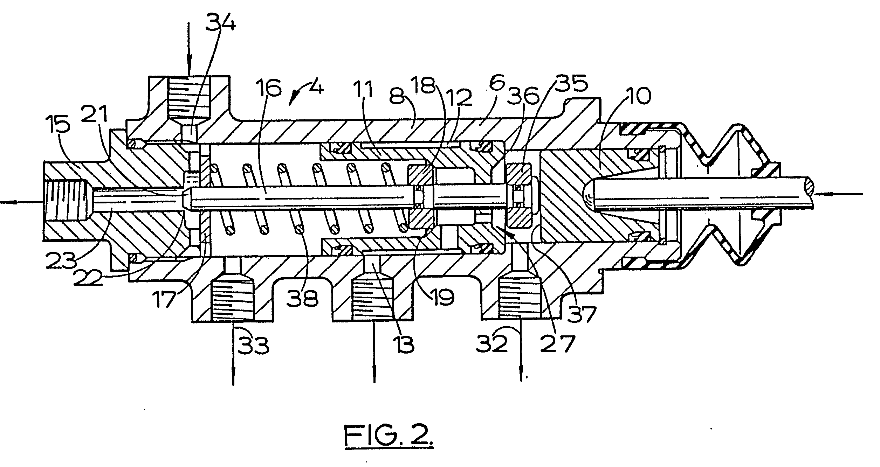

In Figure 2 corresponding reference numerals have been applied to corresponding parts of the construction of Figure 1. The brake-applying valve 6 is identical in construction to the corresponding valve of Figure 1 except that the valve stem 16 which carries the inlet and exhaust valve heads 18 and 19 extends through the secondary piston 11 and also carries a throttle head 35 for engagement with adjacent ends 36 and 37 of the pistons 10 and 11, and that the springs 20, 24 and 25 have been replaced by a single spring 38 which acts between the guide member 17 and the inlet valve head 18 to urge the head 18 towards the inlet seating 19 and the exhaust valve head 21 away from the seating 22.

The remainder of the system is identical to that of Figure 1 but it will be appreciated that the construction of the other brake-applying valve 7 may be modified substantially as described above with reference to the brake-applying valve 6.

When the brake-applying valve 6 of Figure 2 is operated the end 37 of the main piston 10 engages with the head 35 so that the inlet head 18 moves away from the seating 19 to allow fluid from the pump to enter the brake applying chamber 12. Subsequently, the head 21 engages with the seating 22 to close the exhaust port 23, and the throttle 27 defined by the engagement of the head 35 with the end 36 of the secondary piston 11 throttles the return to the reservoir through the return line 32 to increase the pressure of fluid in the chamber 12 which is supplied to the brake on that side of the vehicle through the outlet port 13.

It will be appreciated that by providing the throttle means on the valve stem between adjacent ends of the piston, the number of springs for urging the inlet and the exhaust valve heads into closed and open positions is reduced, resulting in a simplified construction of the brake-applying valve.

**Claims**

1. A control valve assembly (4) for a vehicle hydraulic braking and steering system in which separate first and second brake-applying valves (6, 7) are operable independently or simultaneously by independently operable pedals to cause hydraulic fluid under pressure to be supplied to one or both of a pair of outlets (13) for connection to brakes on wheels on opposite sides of a vehicle, each brake-applying valve comprising a pedal-operated main piston (10) working in a bore (9) in the valve housing, a floating secondary piston (11) working in a portion of the bore (9) in advance of the main piston (10), a throttle means (27) provided between adjacent ends of the pistons (10, 11), a brake-applying chamber (12) defined by the bore and a portion of the secondary piston (11) of reduced diameter for connection to a wheel brake on one side of the vehicle, a pressure space (14) in the bore in advance of the secondary piston (11), a normally closed inlet valve (18, 19) for controlling communication between the brake-applying chamber (12) and the pressure space (14), a normally open exhaust valve (21, 22) for controlling communication between the pressure space (14) and a return line to a reservoir (2) for hydraulic fluid, and spring means (20, 24; 38) for urging the inlet valve towards a closed position and for urging the exhaust valve towards an open position, characterised by the exhaust valve of the first brake-applying valve (6) comprising a valve member (21) which is normally spaced from a seating (22) surrounding an exhaust port (23) connected to the return line to the reservoir (2) to permit communication between the exhaust port (23) and an inlet port (34) of the first brake-applying valve connected to a source of circulating fluid (1) and the pressure space (14) of the brake-applying valve (6) with which the inlet port (34) is in open communication at all times, and the exhaust valve of the second brake-applying valve (7) comprising a valve member (21') which is normally spaced from a seating (22') surrounding an exhaust port (23') connected to the reservoir (1) to permit communication between that port (23') and an inelt port (34') of the second brake applying valve which is connected to the exhaust port (23) of the first brake-applying valve (6), that valve member (21') being sealingly guided through a wall (29) which seals the pressure space (14') from the inlet port (34') of the second brake-applying valve (7), and a transfer connection (33) being provided between the two pressure spaces (14, 14').

2. A control valve assembly according to Claim 1, characterised in that the valve member (21) of the exhaust valve of the first brake-applying valve (6) is carried by a valve stem (16) which is guided through a guide member (17) in the bore (9), and the guide member (17) is apertured to provide communication between the inlet port (34) of the first brake-applying valve and the pressure space (14) of that brake-applying valve (6) at all times.

3. A control valve assembly according to Claim 1 or Claim 2, characterised in that the valve member (21') of the exhaust valve of the second brake-applying valve (7) is carried by a valve stem (16') which is guided through a seal (28) in the wall, the wall comprising a guide member (29) sealed in the bore (9) by another seal (30).

4. A control valve assembly according to any preceding claim, characterised in that the bore (9) is of stepped outline, and the pedal-operated piston (10) is of greater diameter than the secondary floating piston (11) and works in the portion of the bore of greater diameter.

5. A control valve assembly according to any preceding claim, characterised in that the spring means comprises a first spring (20) which acts on a valve member (18) of the inlet valve to urge the valve member (18) towards an inlet valve seating (19), and a second spring (24) which acts in opposition to the first spring (20) to urge the exhaust valve (21, 22) towards an open position, the second spring (24) being stronger than the first spring (20) to ensure that the inlet valve (18, 19) opens before the exhaust valve closes (21, 22).

6. A control valve assembly according to any of the claims 1 to 4, characterised in that the spring means for urging the inlet valve (18, 19) towards a closed position and for urging the exhaust valve (21, 22) towards an open position comprises a single spring (38) which also acts as a return spring for the pistons (10 and 11).

**Revendications**

1. Ensemble (4) de soupapes de commande pour un système hydraulique de freinage et de contrôle de direction, dans lequel une première et une deuxième soupapes (6, 7) séparées d'application des freins peuvent être actionnées indépendamment ou simultanément par des pédales indépendamment actionnables pour faire en sorte que du fluide hydraulique sous pression alimente une paire, ou les deux paires, de sorties (13) destinées à être reliées aux freins des roues qui sont disposés sur les côtés opposés d'un véhicule, chaque soupape d'application de frein comprenant un piston principal (10) actionné par pédale, se déplaçant dans un perçage (9), ménagé dans le carter de soupape, un piston secondaire flottant (11) se déplaçant dans une partie du perçage (9) en avant du piston principal (10), un moyen d'étranglement (27) disposé entre les extrémités voisines des pistons (10, 11), une chambre d'application du frein (12) définie par le perçage et une partie du piston secondaire (11) à diamètre réduit, destinée à être reliée à un frein de roue d'un côté du véhicule, un espace sous pression (14) dans le perçage, en avant du piston secondaire (11), une vanne d'entrée (18, 19), normalement fermée, pour commander la communication entre la chambre (12) d'application de frein et l'espace sous pression (14), une vanne d'évacuation (21, 22), normalement ouverte, pour commander la communication entre l'espace sous pression (14) et un conduit de retour à un réservoir (2) à fluide hydraulique, et un moyen à ressort (20, 24; 38) pour solliciter la vanne d'entrée vers une position fermée et pour solliciter la vanne d'évacuation, vers une position ouverte, caractérisé en ce que la vanne d'évacuation de la première soupage (6) d'application du frein comprend un organe mobile de vanne (21) qui est normalement écarté d'un siège (22) entourant un orifice d'évacuation (23) relié au conduit de retour au réservoir (2) pour permettre une communication entre l'orifice d'évacuation (23) et un orifice d'entrée (34) de la première soupape d'application du frein, relié à une source de fluide en circulation (1) et à l'espace sous pression (14) de cette soupape (6) d'application du frein avec laquelle l'orifice d'entrée (34) est en communication libre à tout moment et en ce que la vanne d'evacuation de la deuxième soupape (7) d'application du frein comprend un organe mobile de vanne (21') qui est normalement écarté d'un siège (22') entourant un orifice d'évacuation (23') relié au réservoir (1) pour permettre une communication entre cet orifice (23') et un orifice d'entrée (34') de la deuxième soupape d'application du frein qui est relié à l'orifice d'évacuation (23) de la première soupape (6) d'application du frein, cet organe mobile de vanne (21') étant guidé hermétiquement à travers une paroi (29) qui ferme de façon étanche l'espace sous pression (14') par rapport à l'orifice d'entrée (34') de la deuxième soupape (7) d'application du frein, et un conduit de transfert (33) étant établi entre les deux espaces sous pression (14, 14').

2. Ensemble de soupapes de commande selon la revendication 1, caractérisé en ce que l'organe mobile de vanne (21) de la vanne d'évacuation de la première soupape (6) d'application du frein est porté par une tige de soupape (16) qui est guidée au travers d'un organe de guidage (17) dans le perçage (9) et en ce que l'organe de guidage (17) est troué pour fournir une communication entre l'orifice d'entrée (34) de la première soupage d'application du frein et l'espace sous pression (14) de cette soupape d'application du frein (6) à tout moment.

3. Ensemble de soupapes de commande selon la revendication 1 ou 2, caractérisé en ce que l'organe mobile de vanne (21') de la vanne d'évacuation de la deuxième soupape (7) d'application du frein est porté par une tige de soupape (16') qui est guidée à travers un joint (28) dans la paroi, la paroi comprenant un organe de guidage (29) monté de façon étanche dans le perçage (9) par un autre joint (30).

4. Ensemble de soupapes de commande selon l'une des revendications précédentes, caractérisé en ce que le perçage (9) a un contour en gradin et en ce que le piston (10), actionné par pédale, a un diamètre plus grand que le piston flottant secondaire (11) et se déplace dans la partie du perçage ayant un plus grand diamètre.

5. Ensemble de soupapes de commande selon l'une des revendications précédentes, caractérisé en ce que le moyen à ressort comprend un premier ressort (20), qui agit sur un organe mobile de vanne (18) de la vanne d'entrée pour solliciter l'organe mobile de vanne (18) vers un siège de vanne d'entrée (19), et un deuxième ressort (24), qui agit en opposition au premier ressort (20) pour solliciter la vanne d'evacuation (21, 22) vers une position ouverte, le deuxième ressort (24) étant plus fort que le premier ressort (20) pour assurer que la vanne d'entrée (18, 19) s'ouvre avant que ne se ferme la vanne d'evacuation (21, 22).

6. Ensemble de soupapes de commande selon l'une des revendications 1 à 4, caractérisé en ce que le moyen à ressort pour solliciter la vanne d'entrée (18, 19) vers une position fermée et pour solliciter la vanne d'évacuation (21, 22) vers une position ouverte, comprend un seul ressort (38) qui agit également comme ressort de rappel pour les pistons (10 et 11).

**Patentansprüche**

1. Steuerventilanordnung (4) für ein hydraulisches Fahrzeug-Brems- und Lenksystem, bei der ein erstes und ein von ihm getrenntes zweites Bremsbetätigungsventil (6, 7) mittels unabhängig voneinander betätigbarer Pedale unabhängig voneinander oder gleichzeitig betätigbar sind, um hydraulisches Druckfluid einem oder beiden Auslässen eines Auslaßpaares (13) zuzuleiten, das an Bremsen von Rädern auf entgegengesetzten Seiten eines Fahrzeuges anschließbar ist, wobei jedes Bremsbetätigungsventil einen in einer Bohrung (9) im Ventilgehäuse arbeitenden pedalbetätigten Hauptkolben (10) hat, einen in einem Abschnitt der Bohrung (9) von dem Hauptkolben (10) arbeitenden, als Frei- oder Schwimmkolben ausgebildeten Sekundärkolben (11), eine Drosselvorrichtung (27) zwischen benachbarten Enden der Kolben (10, 11), eine Bremsbetätigungskammer (12), die von der Bohrung und einem Abschnitt von verkleinertem Durchmesser des Sekundärkolbens (11) gebildet und an eine Radbremse auf einer Seite des Fahrzeuges anschließbar ist, einen in der Bohrung vor dem Sekundärkolben (11) gelegenen Druckraum (14), ein normalerweise geschlossenes Einlaßventil (18, 19) zum Steuern der Verbindung zwischen der Bremsbetätigungskammer (12) und dem Druckraum (14), ein normalerweise geöffnetes Ablaßventil (21, 22) zum Steuern der Verbindung zwischen dem Druckraum (14) und einer Rückleitung zu einem Behälter (2) für hydraulisches Fluid, und eine Federanordnung (20, 24; 38) zum Vorspannen des Einlaßventils in Richtung auf eine Schließstellung und des Ablaßventils in Richtung auf eine Offenstellung, dadurch gekennzeichnet, daß das Ablaßventil des ersten Bremsbetätigungsventils (6) ein Ventilbauteil (21) aufweist, das von einem Sitz (22), der eine an die Rückleitung zum Behälter (2) angeschlossene Ablaßöffnung (23) umgibt, normalerweise ferngehalten ist und die Verbindung zwischen der Ablaßöffnung (23) und einer Einlaßöffnung (34) des ersten Bremsbetätigungsventils ermöglicht, welche an eine Quelle (1) für umlaufendes Fluid und den Druckraum (14) dieses Bremsbetätigungsventils (6) angeschlossen ist, mit dem sie ständig in ungehinderter Verbindung steht, und daß das Ablaßventil des zweiten Bremsbetätigungsventils (7) ein Ventilbauteil (21') aufweist, das von einem Sitz (22'), der eine an den Behälter (2) angeschlossene Ablaßöffnung (23') umgibt, normalerweise ferngehalten ist und die Verbindung zwischen dieser Öffnung (23') und einer Einlaßöffnung (34') des zweiten Bremsbetätigungsventils ermöglicht, die mit der Ablaßöffnung (23) des ersten Bremsbetätigungsventils (6) verbunden ist, wobei dieses Ventilbauteil (21') eine Wand (29), die den Druckraum (14') gegen die Einlaßöffnung (34') des zweiten Bremsbetätigungsventils (7) abdichtet, unter Abdichtung durchdringt und in ihr geführt ist, und zwischen den beiden Druckräumen (14, 14') eine Ausgleichsverbindung (33) vorgesehen ist.

2. Steuerventilanordnung nach Anspruch 1, dadurch gekennzeichnet, daß das Ventilbauteil (21) vom Ablaßventil des ersten Bremsbetätigungsventils (6) von einem Ventilschaft (16) getragen ist, der ein Führungsglied (17) in der Bohrung (9) durchdringt und in ihm geführt ist, und daß das Führungsglied (17) durchbrochen ist und die Einlaßöffnung (34) des ersten Bremsbetätigungsventils ständig mit dem Druckraum (14) dieses Bremsbetätigungsventils (6) verbindet.

3. Steuerventilanordnung nach Anspruch 1 oder 2, dadurch gekennzeichnet, daß das Ventilbauteil (21') vom Ablaßventil des zweiten Bremsbetätigungsventils (7) von einem Ventilschaft (16') getragen ist, der eine Dichtung (28) in der Wand durchdringt und in ihr geführt ist, wobei die Wand von einem Führungsglied (29) gebildet ist, das in der Bohrung (9) durch eine andere Dichtung (30) abgedichtet ist.

4. Steuerventilanordnung nach einem der Ansprüche 1 bis 3, dadurch gekennzeichnet, daß die Bohrung (9) eine Stufenbohrung ist und der pedalbetätigte Kolben (10) von größerem Durchmesser ist als der als Schwimmkolben ausgebildete Sekundärkolben (11) und in dem Abschnitt von größerem Durchmesser der Bohrung arbeitet.

5. Steuerventilanordnung nach einem der Ansprüche 1 bis 4, dadurch gekennzeichnet, daß die elastische Vorrichtung eine erste Feder (20) aufweist, die auf ein Ventilbauteil (18) des Einlaßventils wirkt und es in Richtung auf einen Einlaßventilsitz (19) vorspannt, und eine zweite Feder (24), die der ersten Feder (20) entgegenwirkt und das Ablaßventil (21, 22) in Richtung auf eine Offenstellung vorspannt, wobei die zweite Feder (24) stärker als die erste Feder (20) is und sicherstellt, daß das Einlaßventil (18, 19) öffnet, bevor das Ablaßventil (21, 22) schließt.

6. Steuerventilanordnung nach einem der Ansprüche 1 bis 4, dadurch gekennzeichnet, daß die elastische Vorrichtung zum Vorspannen des Einlaßventils (18, 19) in Richtung auf eine Schließstellung und des Ablaßventils (21, 22) in Richtung auf eine Offenstellung eine einzelne Feder (38) aufweist, die auch als Rückstellfeder für die Kolben (10 und 11) wirkt.

FIG.1.

FIG. 2.

0 042 668